# EUROPÄISCHE PATENTSCHRIFT

(11) **EP 1 169 762 B1**
(45) Veröffentlichungstag und Bekanntmachung des Hinweises auf die Patenterteilung: **26.03.2003**
(21) Anmeldenummer: 00934865.7
(22) Anmeldetag: 04.04.2000
(51) Int. Cl.: H02B 1/20, H02G 3/00

(54) **BUSSYSTEM MIT EINER DATENBUSLEITUNG UND EINER ENERGIEBUSLEITUNG**
BUS SYSTEM WITH A DATA BUS LINE AND A POWER BUS LINE
SYSTEME DE BUS A LIGNE DE BUS DE DONNEES ET A LIGNE DE BUS D'ENERGIE

(30) Priorität: 16.04.1999 DE 19917352
(43) Veröffentlichungstag der Anmeldung: 09.01.2002
(73) Patentinhaber: SIEMENS AKTIENGESELLSCHAFT, 80333 München (DE)
(72) Erfinder: JUNG, Robert, D-92245 Kümmersbruck (DE); KRESS, Toni, D-91207 Lauf (DE); LUBER, Stephan, D-92224 Amberg (DE); KREUTZER, Rainer, D-92637 Weiden (DE); SABISCH, Willy, D-92245 Kümmersbruck (DE); ZERBIAN, Erich, D-92269 Fensterbach (DE)
(86) Internationale Anmeldenummer: DE0001030
(87) Internationale Veröffentlichungsnummer: WO00064019

(56) Entgegenhaltungen:
- DE-U- 29 604 978
- US-A- 5 340 331

## Beschreibung

Die Erfindung bezieht sich auf ein Bussystem mit mindestens einer Datenbusleitung und einer Energiebusleitung zur Versorgung von elektrischen Geräten, insbesondere Geräten der Energietechnik, z.B. Umformer und Motoren, mit Strom und zur Datenkommunikation mit den elektrischen Geräten.

Ein gattungsgemäßes Bussystem ist aus der EP 0 593 995 A1 bekannt, die eine Vorrichtung zur Kraftstromversorgung von Stromverbrauchern und ein Verfahren dafür offenbart. Hierbei wird der Kraftstrom durch eine durchgehende Kraftstromleitung den einzelnen Verbrauchern oder einer Verbrauchergruppe zugeleitet. Die einzelnen Verbraucher oder die Verbrauchergruppen sind über Fernsteuer-Stationen an die Kraftstromleitung geschaltet, wobei die Fernsteuer-Stationen durch eine zentrale Steuerung gesteuert sind. In den Fernsteuer-Stationen sind neben der Kraftstromleitung eine Stromversorgungsleitung für die Fernsteuer-Station und eine Datenleitung durchgeschliffen. Die Leitungen sind an keiner Stelle unterbrochen, sondern es werden die notwendigen Ströme oder Daten nur abgenommen bzw. abgegriffen. In den Fernsteuer-Stationen sind Power-Module vorgesehen, die beispielsweise dazu eingerichtet sein können, eine Motorlast zu erkennen und dies über einen Transceiver an die zentrale Steuerung zu melden, der dann die entsprechenden Steuerungsschritte veranlassen kann. Die Power-Module enthalten hierbei bevorzugt keine mechanischen Schütze, sondern vollelektronische Leistungsschalter.

Aus der DE 37 01 554 A1 ist eine Maschinenanlage mit mehreren Aktoren bekannt, wobei Steuereinrichtungen und Leistungsversorgungseinrichtungen dezentral verteilt sind. Die Aktoren sind jeweils an einer Hilfssteuereinheit angeschlossen, die mit einer zentralen Steuereinheit über einen Datenbus verbunden ist, wobei jede Hilfssteuereinheit direkt mit einer Leistungsverstärkereinheit für ihren zugeordneten Aktor und über einen Leistungsbus mit einer zentralen Leistungsverteilereinheit verbunden ist. Demnach muß nur ein einziger Leistungsbus verlegt werden, an den die einzelnen Aktoren über ihre individuell zugeordneten Leistungsverstärkereinheiten angeschlossen werden. Ein solcher Aktor kann z.B. ein Elektromotor sein, der mit einem vergrößerten Klemmkasten ausgebildet ist. In diesen ist neben den Klemmverbindungen eine intelligente Untereinheit integriert, die über einen Datenbus mit einer zentralen Steuereinheit in Verbindung steht und mit der eine zentrale Leistungsverteilereinheit über einen Leistungsbus angeschlossen ist. Jede Untereinheit ist dabei mit einer Ansteuerlogik, einem Mikroprozessor und einem Parameterspeicher ausgestattet, so daß die Möglichkeit besteht, Daten von Sensoren bzw. Gebern oder Wegaufnehmern zu erfassen. Der Mikroprozessor erlaubt in Verbindung mit dem Parameterspeicher das schrittweise Abarbeiten von komplizierten Arbeitszyklen, wobei alle nur die jeweilige Untereinheit bzw. den jeweiligen Motor betreffenden Abläufe in der Untereinheit intern durchgeführt werden können, ohne daß über den Datenbus größere Mengen von Daten von und zu der zentralen Steuereinheit übertragen werden müssen. Der Datenaustausch mit der zentralen Steuereinheit ist hier nur noch für übergeordnete Ereignisse erforderlich, von denen auch andere Aktoren bzw. Motoren bzw. deren untergeordnete Untereinheiten betroffen sind.

Der Aufwand für Verkabelung, Aufbau, Montage, Inbetriebnahme, Service und Wartung der genannten Bussysteme ist außerordentlich hoch und kostenintensiv. Dieser Aufwand beeinträchtigt die Anlagenverfügbarkeit, die laut Kundenwünschen möglichst über 98 % liegen soll.

Daher liegt der Erfindung die Aufgabe zugrunde, ein Bussystem der oben genannten Art zu schaffen, das möglichst einfach und sicher hinsichtlich Verkabelung, Aufbau, Montage, Inbetriebnahme, Service und Wartung der elektrischen Geräte ist.

Die Aufgabe wird dadurch gelöst, daß Teilabschnitte der Datenbusleitung und der Energiebusleitung an geräteintegrierte Steckanschlüsse und/oder Durchdringungsanschlüsse angeschlossen sind und/oder daß Ein- und Ausspeisegehäuse mit einer Abzweigung für die Datenbusleitung und/oder die Energiebusleitung vorgesehen sind, die Steckanschlüsse und/oder Durchdringungsanschlüsse aufweisen, an die Teilabschnitte der Datenbusleitung und/oder der Energiebusleitung angeschlossen sind.

Die geräteintegrierten Steckanschlüsse und/oder Durchdringungsanschlüsse erlauben eine schnelle und zugleich zuverlässige Kontaktierung der Datenbusleitung und der Energiebusleitung. Die wahlweise Verwendung von Ein- und Ausspeisegehäusen mit T-Funktionalität, versehen mit Steckanschlüssen und/oder Durchdringungsanschlüssen zur Kontaktierung der Datenbusleitung und/oder Energiebusleitung, ermöglichen den Einsatz für beliebige Feldgeräte. Die Feldgeräte selbst können in diesem Fall mit entsprechend verminderter Funktionalität ausgestattet sein. Das Bussystem weist demzufolge eine hohe Variabilität aus, die eine Anpassung an die verschiedensten Anwendungsfälle gestattet.

Vorteilhafte Weiterbildungen der Erfindung sind den Unteransprüchen 2 bis 5 zu entnehmen.

Ausführungsbeispiele der Erfindung werden im folgenden anhand einer Zeichnung näher erläutert. Es zeigen:
- FIG 1: ein Bussystem mit einer durchgehenden Energiebusleitung und einer durchgehenden Datenbusleitung zum Anschluß an dezentral verteilte Feldgeräte,
- FIG 2: einen integrierten Motorabzweig mit Anschlüssen für eine Datenbusleitung und eine Energiebusleitung in unterschiedlicher Ausprägung,
- FIG 3: einen integrierten Abzweig bei einer Werkzeugmaschine mit Anschluß einer Datenbusleitung und einer Energiebusleitung über Steckanschlüsse und
- FIG 4: einen integrierten Motorabzweig mit Motorabgangsstecker mit unterschiedlichen Varianten zum Anschluß einer Datenbusleitung sowie der wahlweisen Energieeinspeisung über Stecker, über PG mit Klemmleiste oder Durchdringungstechnik.

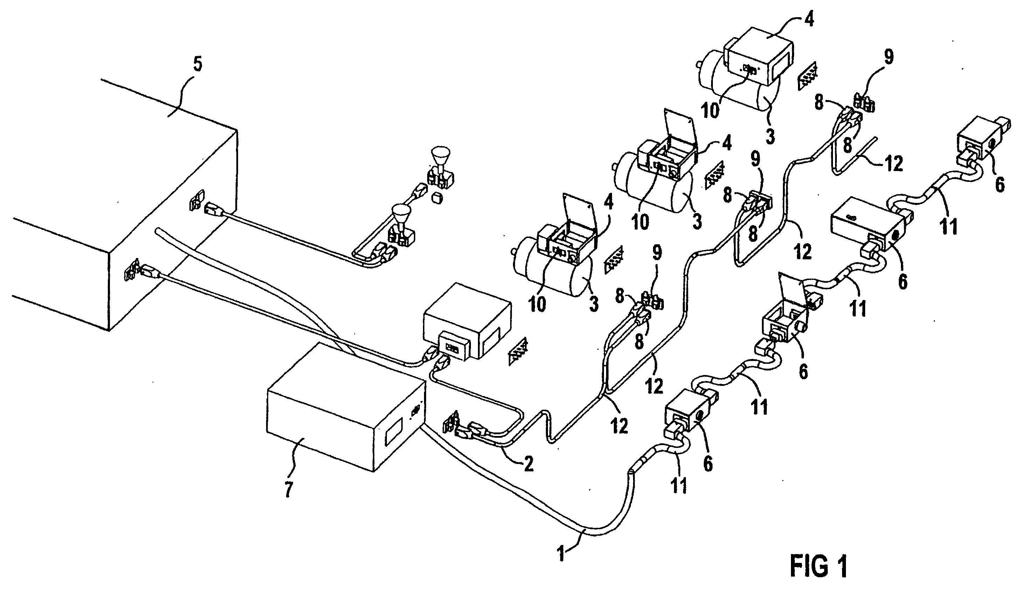

Figur 1 zeigt ein Bussystem, das mindestens eine Energiebusleitung 1 und eine Datenbusleitung 2 umfaßt, an die dezentral verteilte Feldgeräte 3 zur Versorgung mit elektrischer Energie, gegebenenfalls zusätzlich mit Hilfsenergie, und zur Datenkommunikation anschließbar sind. Die dezentralen Feldgeräte 3 sind elektrische Verbraucher, insbesondere Motoren, Werkzeugmaschinen und z.B. Frequenzumrichter, die eine geräteintegrierte Schalt- und Steuereinheit 4 aufweisen. Die Energiebusleitung 1 ist hier als mehradriges Rundkabel zur Drehstromversorgung ausgeführt, das von einem Schaltschrank 5 mit Gruppenabsicherung, z.B. einem modifizierten Leistungsschalter, abgeht und unter Zwischenschaltung von Ein- und Ausspeisegehäusen 6 mit T-Funktionalität zu den Feldgeräten 3 geführt ist. Die Ein- und Ausspeisegehäuse 6 dienen als Abzweige zum elektrischen Anschluß an die Schalt- und Steuereinheiten 4 der Feldgeräte 3, um hierüber die Stromversorgung durchzuführen. Die Datenbusleitung 2 geht von einer speicherprogrammierbaren Steuerung 7 ab und ist hier über Steckanschlüsse 8 mit der Schalt- und Steuereinheit 4 elektrisch verbindbar, wobei die Datenbusleitung 2 über ein T-Stück 9 an das jeweils nächste Feldgerät 3 weitergeschleift wird, so daß eine durchgehende Datenbusleitung 2 realisiert ist. Das T-Stück 9 ist also zwischen den Steckanschlüssen 8 der Datenbusleitung 2 und Gegensteckanschlüssen 10 an der Schalt- und Steuereinheit 4 zwischengeschaltet.

Die Ein- und Ausspeisegehäuse 6 können bedarfsweise mit einem Reparaturschalter bzw. Kurzschlußschutz versehen sein.

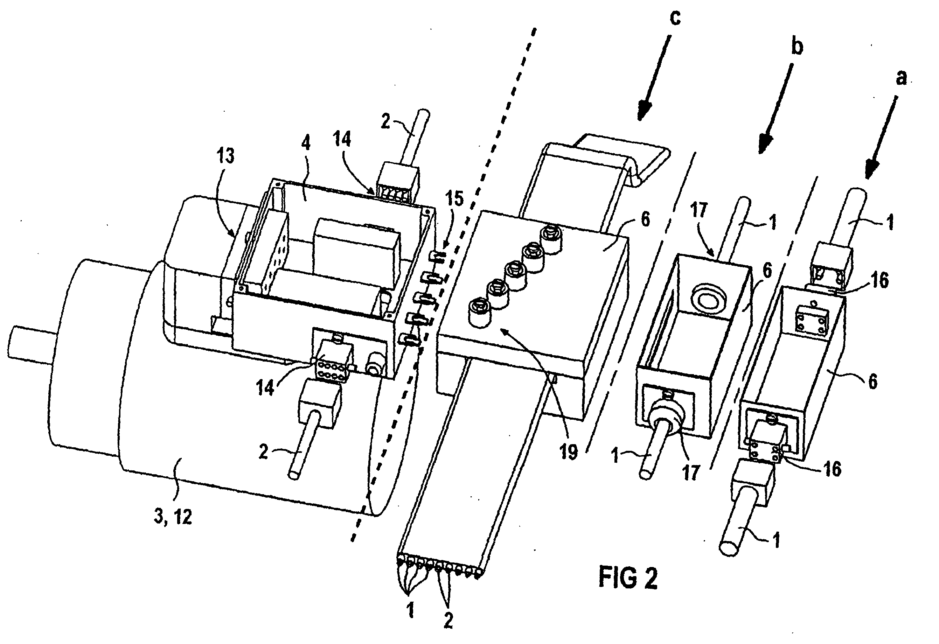

In Figur 2 ist als Ausführungsbeispiel ein integrierter Motorabzweig dargestellt, bei dem ein Motor 12 als Feldgerät über seinen Steckanschluß 13 mit der Schalt- und Steuereinheit 4 elektrisch verbunden ist. In dieser sind die Funktionen Schützen und Schalten realisiert. Seitlich der Schalt- und Steuereinheit 4 befinden sich Steckanschlüsse 14 zum Anschluß der Datenbusleitung 2 sowie zusätzliche Steckanschlüsse 15 zum Anschluß des Ein- und Ausspeisegehäuses 6 für die Stromversorgung. Die Datenbusleitung 2 kann z.B. in Form von geschirmten Leitungen (z.B. Profi-DP) oder Lichtwellenleitern ausgeführt sein. Zur Realisierung der Energiebusleitung 1 stehen grundsätzlich drei Alternativen a, b und c zur Verfügung. In den Fällen a und b ist die Energiebusleitung 1 als Rundleitung ausgeführt, wobei die Kontaktierung mit den Ein- und Ausspeisegehäusen 6 im Fall a über Steckanschlüsse 16 erfolgt und im Fall b über eine PG-Verschraubung 17. Bei.der Ausführung c handelt es sich um ein Flachkabel, welches mit Durchdringungsanschlüssen 19 im Ein- und Ausspeisegehäuse 6 mittels Durchdringungskontaktierung kontaktiert wird und das neben der Energiebusleitung 1 mit den entsprechenden Leitungsadern auch noch die Datenbusleitung 2 und/oder bedarfsweise Hilfsenergieleitungen, z.B. mit 24 V Hilfsspannung, beinhalten kann. Den Steckanschlüssen 15 an der Schalt- und Steuereinheit 4 sind entsprechende, hier nicht sichtbare Gegensteckanschlüsse im Ein- und Ausspeisegehäuse 6 zugeordnet.

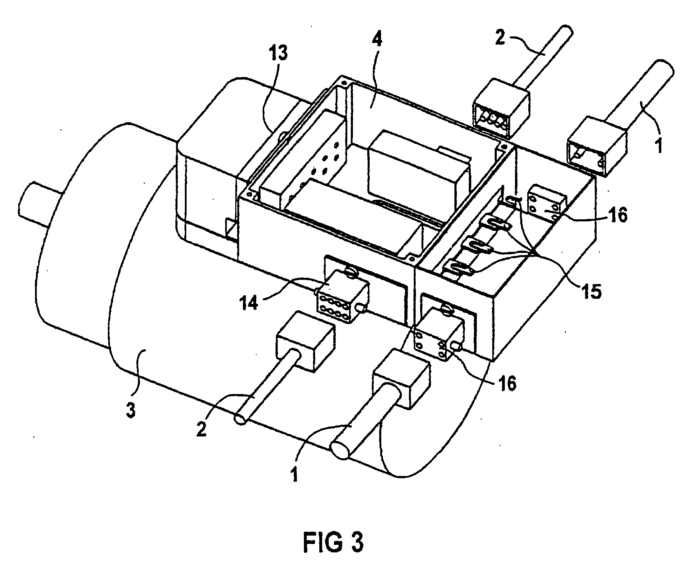

Figur 3 zeigt als Feldgerät eine Werkzeugmaschine 3 mit einem Steckanschluß 13, an den wiederum die Schalt- und Steuereinheit 4 mit der Funktion Schützen und Schalten angeschlossen ist. An diese ist über die seitlichen Steckanschlüsse 15 das Ein- und Ausspeisegehäuse 6 angeschlossen, das zu- und abgangsseitig über Steckanschlüsse 16 mit der Energiebusleitung 1 verbindbar ist. Die Energiebusleitung 1 ist hier z.B. als Rundkabel mit vier Leitungsadern ausgeführt. Die weiteren seitlichen Steckanschlüsse 14 an der Schalt- und Steuereinheit 4 dienen zum Anschluß eines Kabels mit der Datenbusleitung 2 und vier Steuerleitungen zur Zuführung einer 24 V-Hilfsspannung, d.h. das Kabel ist als Hybridleitung ausgeführt.

Bei Verwendung von genormten Steckanschlüssen mit definierter Pin-Belegung, z.B. den bekannten Normanschlüssen gemäß DESINA (Dezentralisierte und Standardisierte Installationstechnik, Verein Deutscher Werkzeugmaschinen e.V. (VDW)) kann die Verdrahtung und Montage unter Vermeidung fehlerhafter Anschlüsse erheblich vereinfacht werden.

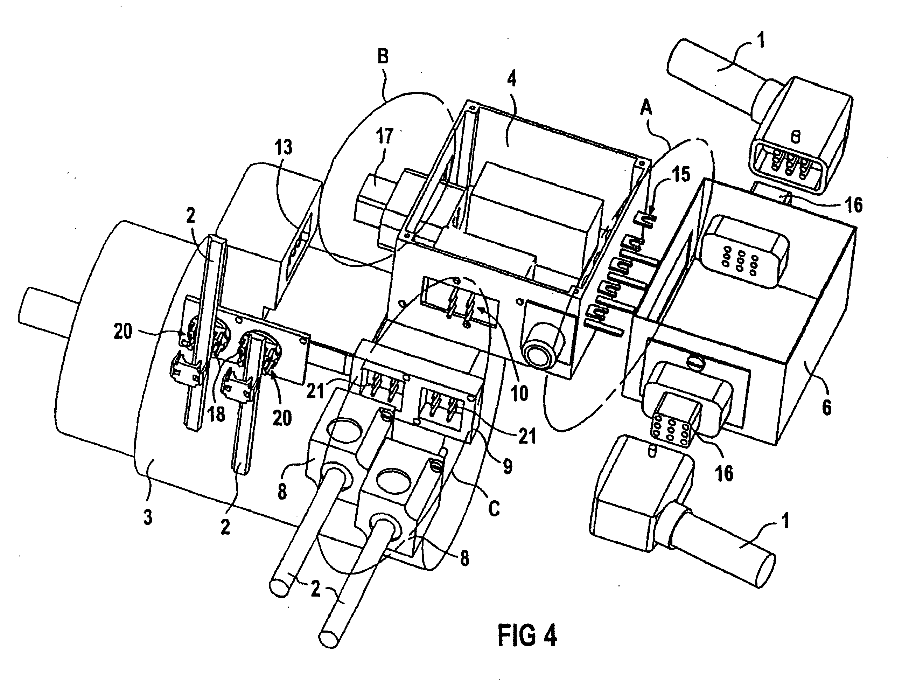

In Figur 4 ist die Ausführung eines integrierten Motorabzweigs in verschiedenen Varianten dargestellt. Der Aufbau entspricht grundsätzlich den bereits vorangehend beschriebenen Ausfuhxungsformen, wobei die verschiedenen Schnittstellen zur Anbindung der Energiebusleitung 1 und der Datenbusleitung 2 hervorgehoben sind. Die Energieeinspeisung erfolgt hier über die Schnittstelle A mit den Steckanschlüssen 15 der Schalt- und Steuereinheit 4, wobei als Energiebusleitung 1 hier eine 7-polige Rundleitung mit fünf Leitungsadern zur Zuführung der Energie und mit zwei weiteren Leitungsadern zur Zuführung der Hilfsenergie mit höheren Strömen vorgesehen ist. Die Energiebusleitung 1 ist über Steckanschlüsse 16 an das Ein- und Ausspeisegehäuse 6 angeschlossen. Die elektrische Anbindung des Ein- und Ausspeisegehäuses 6 an den Motor 3 über die Schnittstelle B erfolgt über den Steckanschlüssen 13 angepaßte Gegensteckanschlüsse 17. Die Datenbusleitung 2 ist an der Schnittstelle C unter Zwischenschaltung des T-Stücks 9 mit Steckanschlüssen 21 an Steckanschlüsse 10 des Ein- und Ausspeisegehäuses 6 angeschlossen. Die Datenbusleitung 2 ist hier in einer Hybridleitung enthalten, die zusätzlich vier Leitungsadern für die Hilfsenergieversorgung mit niedrigen Strömen (max. 10 A) aufweist.

Bei Anwendungsfällen mit dem Bedarf von Hilfsenergie mit höheren Strömen sind, wie zuvor schon erwähnt, im Energiekabel zusätzliche Leitungsadern mitgeführt. Für diese Anwendungsfälle kann die Datenbusleitung 2 als durchgeschleiftes formcodiertes zweiadriges Flachkabel gemäß Figur 4 ausgeführt werden, das über eine Durchdringungskontaktiereinrichtung 18 mit Durchdringungsanschlüssen 20 am Motor 3 kontaktierbar ist.

Die Ein- und Ausspeisegehäuse 6 mit ihren wahlweisen Anschlüssen 16, 17, 19 können in der Schalt- und Steuereinheit 4 und damit im Feldgerät 3 integriert sein. Dies trifft auch für das ebenfalls als ein Ein- und Ausspeisegehäuse zu betrachtende T-Stück 9 gemäß Figur 4 zur Ankopplung der Datenbusleitung 2 zu, das an die Steckanschlüsse 8 der Datenbusleitung 2 angepaßte Gegenstückanschlüsse 21 aufweist.

Andererseits kann die im Feldgerät 3 integrierte Durchdringungskontaktierungseinrichtung 18 gemäß Figur 4 als zusätzliches Ein- und Ausspeisegehäuse mit Durchdringungsanschlüssen 20 zur Kontaktierung der zweiadrigen Datenbusleitung 2 ausgeführt sein.

Die erfindungsgemäßen Ausführungsformen zeichnen sich demzufolge dadurch aus, daß Teilabschnitte 11, 12 (siehe Figur 1) der Energiebusleitung 1 und der Datenbusleitung 2 an geräteintegrierte Steckanschlüsse 14, 16, 17, 21 und/oder Durchdringungsanschlüsse 19, 20 angeschlossen sind und/oder daß zusätzlich Ein-und Ausspeisegehäuse 6, 9, 18 mit einer Abzweigung für die Datenbusleitung 2 und/oder die Energiebusleitung 1 vorgesehen sind, die Steckanschlüsse 16, 17, 21 und/oder Durchdringungsanschlüsse 19, 20 aufweisen, an die Teilabschnitte 11, 12 der Datenleitung 2 und/oder der Energiebusleitung 1 angeschlossen sind. Die geräteintegrierten Steckanschlüsse 16,17 und Durchdringungsanschlüsse 19 können dadurch realisiert werden, daß die Ein- und Ausspeisegehäuse 6 über Steckanschlüsse 15 mit den Feldgeräten 3 verbunden werden. Die Ein- und Ausspeisegehäuse 6 bilden dann mit den Feldgeräten 3 und ihrer Schalt- und Steuereinheit 4 eine Einheit.

Zur Datenkommunikation ist anstelle der Datenbusleitung 2 die Anwendung des bekannten PLC-Verfahrens (Power Line Carrier) denkbar, bei dem die Daten auf den Strom der Energiebusleitung 1 aufmoduliert werden.

Weiterhin ist der Anschluß eines Projektierungswerkzeuges an das Bussystem für alle Hardware- und Software-Komponenten vorgesehen. Es handelt sich um ein Werkzeug zur rechnergestützten grafischen Projektierung von dezentralen energiebusfähigen Geräten.

## Patentansprüche

1. Bussystem mit mindestens einer Datenbusleitung (2) und einer Energiebusleitung (1) zur Versorgung von elektrischen Geräten (3), insbesondere Geräten der Energietechnik, z.B. Umformer und Motoren, mit Strom und zur Datenkommunikation mit den elektrischen Geräten (3), **dadurch gekennzeichnet, daß** Teilabschnitte (11, 12) der Datenbusleitung (2) und der Energiebusleitung (1) an geräteintegrierte Steckanschlüsse (14, 16, 17, 21) und/oder Durchdringungsanschlüsse (19, 20) angeschlossen sind und/oder daß Ein- und Ausspeisegehäuse (6, 9, 18) mit einer Abzweigung für die Datenbusleitung (2) und/oder die Energiebusleitung (1) vorgesehen sind, die Steckanschlüsse und/oder Durchdringungsanschlüsse (19, 20) aufweisen, an die Teilabschnitte (11, 12) der Datenbusleitung und/oder der Energiebusleitung (1) angeschlossen sind.

2. Bussystem nach Anspruch 1, **dadurch gekennzeichnet, daß** nur die Datenbusleitung (2) an geräteintegrierte Steckanschlüsse (14, 21) angeschlossen ist und daß die Energiebusleitung an geräteintegrierte Durchdringungsanschlüsse (19) angeschlossen ist bzw. umgekehrt.

3. Bussystem nach Anspruch 1 oder 2, **dadurch gekennzeichnet, daß** die Datenbusleitung (2) und die Energiebusleitung (1) jeweils als Flachkabel ausgeführt ist.

4. Bussystem nach einem der vorangehenden Ansprüche, **dadurch gekennzeichnet, daß** die Datenbusleitung (2) und die Energiebusleitung (1) in einem gemeinsamen Flachkabel integriert sind.

5. Bussystem nach einem der vorangehenden Ansprüche, **dadurch gekennzeichnet, daß** ein Projektierungswerkzeug für seine Hardware- und Software-Komponenten vorgesehen ist.

## Claims

1. Bus system having at least one data bus line (2) and one power bus line (1) for supplying electrical appliances (3), in particular power appliances, for example converters and motors, with current and for data communication with the electrical appliances (3), **characterised in that** subsections (11, 12) of the data bus line (2) and of the power bus line (1) are connected to plug connections (14, 16, 17, 21) and/or to insulation displacement connections (19, 20) which are integrated in the appliance, and/or **in that** feeder and outgoer housings (6, 9, 18) are provided having an outgoing branch for the data bus line (2) and/or for the power bus line (1), which have plug connections and/or insulation displacement connections (19, 20), to which subsections (11, 12) of the data bus line and/or of the power bus line (1) are connected.

2. Bus system according to Claim 1, **characterised in that** only the data bus line (2) is connected to plug connections (14, 21) which are integrated in the appliance, and **in that** the power bus line is connected to insulation displacement connections (19) which are integrated in the appliance, or vice versa.

3. Bus system according to Claim 1 or 2, **characterised in that** the data bus line (2) and the power bus line (1) are each in the form of flat cables.

4. Bus system according to one of the preceding claims, **characterised in that** the data bus line (2) and the power bus line (1) are integrated in a common flat cable.

5. Bus system according to one of the preceding claims, **characterised in that** a configuration tool is provided for its hardware and software components.

## Revendications

1. Système de bus comportant au moins un bus de données (2) et un bus d'alimentation en énergie (1) destiné à alimenter en courant des appareils électriques (3), en particulier des appareils en courant fort, par exemple des convertisseurs et des moteurs, et destiné à la communication de données avec les appareils électriques (3), **caractérisé en ce que** des sections (11, 12) du bus de données (2) et du bus d'alimentation en énergie (1) sont raccordées à des bornes enfichables intégrées à l'appareil (14, 16, 17, 21) et/ou à des bornes traversantes (19, 20), et **en ce qu'**il est prévu des boîtiers d'entrée et de sortie d'alimentation (6, 9, 18) dans une dérivation destinée au bus de données (2) et/ou au bus d'alimentation en énergie (1), qui comportent des bornes enfichables et/ou des bornes traversantes (19, 20) auxquelles sont raccordées les sections (11, 12) du bus de données et du bus d'alimentation en énergie (1).

2. Système de bus selon la revendication 1, **caractérisé en ce que** seul le bus de données (2) est raccordé aux bornes enfichables (14, 21) intégrées à l'appareil, et **en ce que** le bus d'alimentation en énergie est raccordé aux bornes traversantes (19) intégrées à l'appareil, ou inversement.

3. Système de bus selon la revendication 1 ou la revendication 2, **caractérisé en ce que** le bus de données (2) et le bus d'alimentation en énergie (1) sont tous les deux conformés en câble plat.

4. Système de bus selon l'une des revendications précédentes, **caractérisé en ce que** le bus de données (2) et le bus d'alimentation en énergie (1) sont intégrés dans un câble plat commun.

5. Système de bus selon l'une des revendications précédentes, **caractérisé en ce qu'**il est prévu un outil de projet d'élaboration de ses composant matériels et logiciels.
